# EUROPÄISCHE PATENTSCHRIFT

(11) **EP 3 363 281 B1**
(45) Veröffentlichungstag und Bekanntmachung des Hinweises auf die Patenterteilung: **17.02.2021**
(21) Anmeldenummer: 17208337.0
(22) Anmeldetag: 19.12.2017
(51) Int. Cl.: A01F 29/22

(54) **ERFASSUNGSANORDNUNG ZUR ERFASSUNG EINES VERSCHLEISSZUSTANDES EINES HÄCKSELWERKS**
DETECTION SYSTEM FOR DETECTING WEAR OF A CHOPPING MECHANISM
DISPOSITIF DE DÉTECTION PERMETTANT DE DÉTECTER UN ÉTAT D'USURE D'UN MÉCANISME HACHEUR

(30) Priorität: 21.02.2017 DE 102017103537
(43) Veröffentlichungstag der Anmeldung: 22.08.2018
(73) Patentinhaber: CLAAS Selbstfahrende Erntemaschinen GmbH, 33428 Harsewinkel (DE)
(72) Erfinder: Neitemeier, Dennis, 59510 Lippetal (DE); Huster, Jochen, 33330 Gütersloh (DE); Kettelhoit, Boris, 33335 Gütersloh (DE); Fischer, Frédéric, 59823 Arnsberg (DE); Grove, Carsten, 48361 Beelen (DE)
(74) Vertreter: CLAAS Gruppe

(56) Entgegenhaltungen:
- EP-A2- 0 943 888
- DE-A1-102011 005 317
- DE-A1-102014 218 408

## Beschreibung

Die vorliegende Erfindung betrifft ein Häckselwerk mit einer Erfassungsanordnung zur Erfassung eines Verschleißzustands eines Häckselwerks eines zur Verarbeitung eines Gutstroms vorgesehenen Feldhäckslers gemäß dem Oberbegriff von Anspruch 1, sowie einen Feldhäcksler gemäß dem Oberbegriff von Anspruch 13.

Der in Rede stehende Feldhäcksler ist mit einem Häckselwerk ausgestattet, das eine Messertrommel mit daran angeordneten, länglichen Häckselmessern sowie eine ortsfeste Gegenschneide aufweist. Das der Häckseltrommel zugeführte Erntegut wird durch das Zusammenwirken zwischen den Häckselmessern und der Gegenschneide gehäckselt, also zerkleinert.

Während des Häckselbetriebs kommt es zu einem Verschleiß des Häckselwerks, der auf einen Verschleiß der Häckselmesser zurückgeht. Im Einzelnen kommt es zu einem verschleißbedingten Abtrag im Bereich der Schneidkanten der Häckselmesser, was zu einer Herabsetzung von Schnittqualität und Erntegutdurchsatz führt.

Durch den Verschleiß im Bereich der Schneidkanten der Häckselmesser ergibt sich einerseits eine Änderung der Schneidkantengeometrie und andererseits eine Vergrößerung des Eingriffsspalts zwischen Schneidkante und Gegenschneide. Die Schneidkantengeometrie lässt sich nur durch ein Nachschleifen der Häckselmesser wiederherstellen, während der Eingriffsspalt zwischen Schneidkante und Gegenschneide regelmäßig durch ein Zustellen der Gegenschneide nachgeführt werden kann. Beide Maßnahmen lassen sich bei heutigen Feldhäckslern automatisch und ohne Werkstattaufenthalt vornehmen, müssen allerdings zum richtigen Zeitpunkt ausgelöst werden. Insoweit kommt der genauen Erfassung des Verschleißzustands des Häckselwerks besondere Bedeutung zu.

Die bekannte Erfassungsanordnung zur Erfassung eines Verschleißzustands eines Häckselwerks (DE 10 2014 218 408 A1), von der die Erfindung ausgeht, geht auf die grundsätzliche Überlegung zurück, dass der Eingriffsspalt zwischen Häckselmesser und Gegenschneide einen Spalt eines Magnetkreises ausbilden kann, so dass aus der Änderung des Magnetflusses auf den Verschleißzustand des betreffenden Häckselmessers geschlossen werden kann. Hierfür ist die Erfassungsanordnung mit einer Magnetanordnung ausgestattet, die eine magnetische Erregeranordnung in Form eines Permanentmagneten sowie eine Flussleiteinrichtung zum Leiten eines resultierenden magnetischen Flusses aufweist.

Beim Passieren der Magnetanordnung durch ein Häckselmesser erzeugt die Magnetanordnung einen magnetischen Fluss, der das betreffende Häckselmesser quer zu seiner Längserstreckung durchdringt. Der resultierende magnetische Fluss hängt dabei u.a. von dem Verschleißzustand des betreffenden Häckselmessers ab, so dass daraus grundsätzlich auf den Verschleißzustand geschlossen werden kann.

Die bekannte Erfassungsanordnung ist insoweit nachteilig, als die Erfassung des Verschleißzustands nur eine einzige Messstelle entlang der Längserstreckung des betreffenden Häckselmessers betrifft. Dies kann zu einer Fehleinschätzung des Verschleißzustands führen, beispielsweise wenn eine singuläre Fehlstelle des Häckselmessers ausgerechnet an dieser Messstelle vorliegt, das Häckselmesser im Übrigen jedoch verschleißfrei ist. Um eine solche Fehleinschätzung zu vermeiden, müssten mehrere der bekannten Erfassungsanordnung entlang der die Magnetanordnung passierenden Häckselmesser angeordnet sein. Dies wäre kostentechnisch nachteilig.

Der Erfindung liegt das Problem zugrunde, die bekannte Erfassungsanordnung derart auszugestalten und weiterzubilden, dass die Erfassung des Verschleißzustands des Häckselwerks mit einfachen Maßnahmen verbessert wird.

Das obige Problem wird bei einem Häckselwerk gemäß dem Oberbegriff von Anspruch 1 durch die Merkmale des kennzeichnenden Teils von Anspruch 1 gelöst.

Bei der vorschlagsgemäßen Lösung wird zunächst davon ausgegangen, dass die Magnetanordnung eine Polanordnung aufweist, die mindestens einen magnetischen Pol mit einer Polfläche zum Ausleiten von Magnetfluss ausbildet. Bei einer Drehung der Messertrommel passiert zumindest ein Teil der Häckselmesser die Polanordnung zyklisch. Dabei bildet das die Polanordnung jeweils passierende Häckselmesser eine Luftspaltanordnung mit mindestens einem Luftspalt zu der Polanordnung hin aus, wodurch mindestens ein von der Erregeranordnung erregter Magnetkreis über das jeweilige Häckselmesser geschlossen wird. Der in diesem Magnetkreis resultierende magnetische Fluss hängt von dem Verschleißzustand des jeweiligen Häckselmessers ab.

Entsprechend ist die Erfassungsanordnung mit einer Messanordnung und einer Auswerteeinheit ausgestattet, wobei die Messanordnung mindestens eine magnetische Messgröße betreffend den Magnetfluss in dem jeweiligen Magnetkreis erfasst und wobei die Auswerteeinheit aus der mindestens einen erfassten Messgröße den Verschleißzustand des jeweiligen Häckselmessers ermittelt. Der Verschleißzustand ergibt sich aus dem verschleißbedingten Abtrag der Schneidkante des Häckselmessers und der damit verbundenen Veränderung der Breite des Eingriffsspalts zwischen der Schneidkante des Häckselmessers und der Gegenschneide. Damit werden auch die Breite mindestens eines Luftspalts der Luftspaltanordnung und der obige Magnetfluss durch den Verschleißzustand beeinflusst. Im Ergebnis lässt sich auch ein Wert für den Verschleißzustand aus der obigen Messgröße ermitteln.

Wesentlich für die vorschlagsgemäße Lösung ist die grundsätzliche Überlegung, dass zumindest ein Teil des von der magnetischen Erregeranordnung erzeugten Magnetflusses zumindest über einen Längsabschnitt des die Polanordnung passierenden Häckselmessers in dem Häckselmesser längsgeführt wird. Anders als aus dem Stand der Technik bekannt, wird der Magnetfluss in dem jeweiligen Häckselmesser also nicht mehr quergeführt, sondern längsgeführt.

Die Erfassung des Verschleißzustands betrifft damit den gesamten oben genannten Längsabschnitt des Häckselmessers und die diesen Längsabschnitt begrenzenden Spalte der Spaltanordnung, so dass eine oben angesprochene singuläre Fehlstelle bei der Erfassung des Verschleißzustands weniger ins Gewicht fällt.

Da ein Durchdringen des Häckselmessers in Querrichtung nicht mehr erforderlich ist, lässt sich die Polanordnung ohne weiteres daraufhin optimieren, dass der resultierende magnetische Fluss in größtmöglichem Maße über die Schneidkante des jeweiligen Häckselmessers längsgeführt wird.

Das vorschlagsgemäße Häckselwerk weist eine Messertrommel mit daran angeordneten, länglichen Häckselmessern sowie mindestens eine Gegenschneide, die mit den Häckselmessern in oben angesprochener Weise zusammenwirkt, auf. Wesentlich ist die Tatsache, dass das vorschlagsgemäße Häckselwerk mit einer vorschlagsgemäßen, oben angesprochenen Erfassungsanordnung zur Erfassung eines Verschleißzustands des Häckselwerks ausgestattet ist. Auf alle Ausführungen zu der vorschlagsgemäßen Erfassungsanordnung darf verwiesen werden.

Die bevorzugten Ausgestaltungen gemäß den Ansprüchen 2 bis 4 betreffen vorteilhafte Realisierungsmöglichkeiten für die Polanordnung mit einer verschiedenen Anzahl von Polen. Wesentlich bei all diesen Varianten ist die Tatsache, dass der vorschlagsgemäße, in dem jeweiligen Häckselmesser längsgeführte Magnetfluss zwischen zwei solcher Pole der Polanordnung verläuft.

Bei der weiter bevorzugten Ausgestaltung gemäß Anspruch 5 sind die Pole der Polanordnung entlang der Schneidkante des die Polanordnung passierenden Häckselmessers oder entlang der Gegenschneide angeordnet, so dass sich der in Rede stehende Magnetfluss verlustarm über das jeweilige Häckselmesser führen lässt.

Eine besonders bevorzugte Ausgestaltung für die Ausgestaltung der Flussleiteinrichtung ist Gegenstand von Anspruch 6. Die Auslegung der Magnetanordnung mit einem zentralen Abschnitt der Flussleiteinrichtung ermöglicht die Realisierung unterschiedlicher Erfassungsbereiche mit ein und derselben Erfassungsanordnung.

Die ebenfalls bevorzugten Ausgestaltungen gemäß den Ansprüchen 7 und 8 betreffen die strukturelle Realisierung von Erfassungsanordnung einerseits und Magnetanordnung andererseits. Bei der besonders bevorzugten Ausgestaltung gemäß Anspruch 7 ist die Magnetanordnung, insbesondere zusammen mit der Messanordnung, als von der Gegenschneide separate Baueinheit ausgestaltet, so dass die mechanische Robustheit der Gegenschneide durch die Magnetanordnung nicht beeinträchtigt ist. Gleichzeitig ist es gemäß Anspruch 8 vorzugsweise vorgesehen, dass die Magnetanordnung mit der Gegenschneide gekoppelt ist, so dass sich ein eventuelles Zustellen der Gegenschneide auf die Magnetanordnung überträgt.

Verschiedene vorteilhafte Varianten für die Auslegung der Messanordnung sind Gegenstand der Ansprüche 9 bis 11. Hervorzuheben ist die Ausstattung der Messeinheit mit einer Spulenanordnung gemäß Anspruch 10, die über die jeweils induzierte Spannung eine besonders einfache Variante der Erfassung einer Veränderung des magnetischen Flusses ist.

Anspruch 12 betrifft verschiedene bevorzugte Varianten für die Ausgestaltung der Auswerteeinheit. Hier wird deutlich, dass die vorschlagsgemäße Lösung mit ein und derselben Magnetanordnung auf unterschiedlichste Weise variiert werden kann. Dies vorzugsweise ausschließlich softwaretechnisch.

Nach einer weiteren Lehre gemäß Anspruch 13, der ebenfalls eigenständige Bedeutung zukommt, wird ein Feldhäcksler zur Verarbeitung eines Gutstroms als solcher beansprucht.

Der vorschlagsgemäße Feldhäcksler weist eine Vorpresseinheit, die mit mindestens zwei, einen Presskanal ausbildenden Vorpresswalzen ausgestattet ist, sowie einen Auswurfkanal auf. Wesentlich ist nach dieser weiteren Lehre die Tatsache, dass ein vorschlagsgemäßes, oben angesprochenes Häckselwerk mit einer Erfassungsanordnung zur Erfassung eines Verschleißzustands vorgesehen ist. Auch diesbezüglich darf auf alle Ausführungen zu dem vorschlagsgemäßen Häckselwerk, sowie zu der vorschlagsgemäßen Erfassungsanordnung verwiesen werden.

Im Folgenden wird die Erfindung anhand einer lediglich ein Ausführungsbeispiel darstellenden Zeichnung näher erläutert. In der Zeichnung zeigt
- Fig. 1: einen vorschlagsgemäßen Feldhäcksler mit einem vorschlagsgemäßen Häckselwerk sowie mit einer vorschlagsgemäßen Erfassungsanordnung in einer ganz schematischen Darstellung,
- Fig. 2: die Erfassungsanordnung des Feldhäckslers gemäß Fig. 1 in der Ansicht II-II,
- Fig. 3: die Erfassungsanordnung gemäß Fig. 2 in der Ansicht III, und
- Fig. 4: eine alternative Ausführungsform für die Erfassungsanordnung gemäß Fig. 3.

Die in der Zeichnung dargestellte Erfassungsanordnung 1 dient der Erfassung eines Verschleißzustands eines Häckselwerks 2, das einem zur Verarbeitung eines Gutstroms vorgesehenen Feldhäcksler 3 zugeordnet ist. Der Feldhäcksler 3 ist hier und vorzugsweise mit einem Erntevorsatz 4 ausgestattet. Der Feldhäcksler 3 weist ferner eine Vorpresseinheit 5 auf, die als Zuführeinrichtung für das Erntegut fungiert. Die Vorpresseinheit 5 ist mit mindestens zwei, hier insgesamt vier, einen Presskanal 6 ausbildenden Vorpresswalzen 7-10 ausgestattet. Dabei übernehmen die vorderen Vorpresswalzen 7,8 eine Vorverdichtung des aufgenommenen Ernteguts, während die hinteren Vorpresswalzen 9,10 eine gleichmäßige Verdichtung und einen Weitertransport des Ernteguts übernehmen.

Das Häckseln des aufgenommenen Ernteguts wird in dem Häckselwerk 2 vorgenommen, an das sich eine weitere Fördervorrichtung 11 für den Transport des gehäckselten Ernteguts in einen Auswurfkanal 12 anschließt. Das Häckselwerk 2 weist eine Messertrommel 13 mit daran angeordneten, länglichen Häckselmessern 14 sowie mindestens eine, hier und vorzugsweise genau eine, Gegenschneide 15 auf, die für den Häckselprozess mit den Häckselmessern 14 zusammenwirkt.

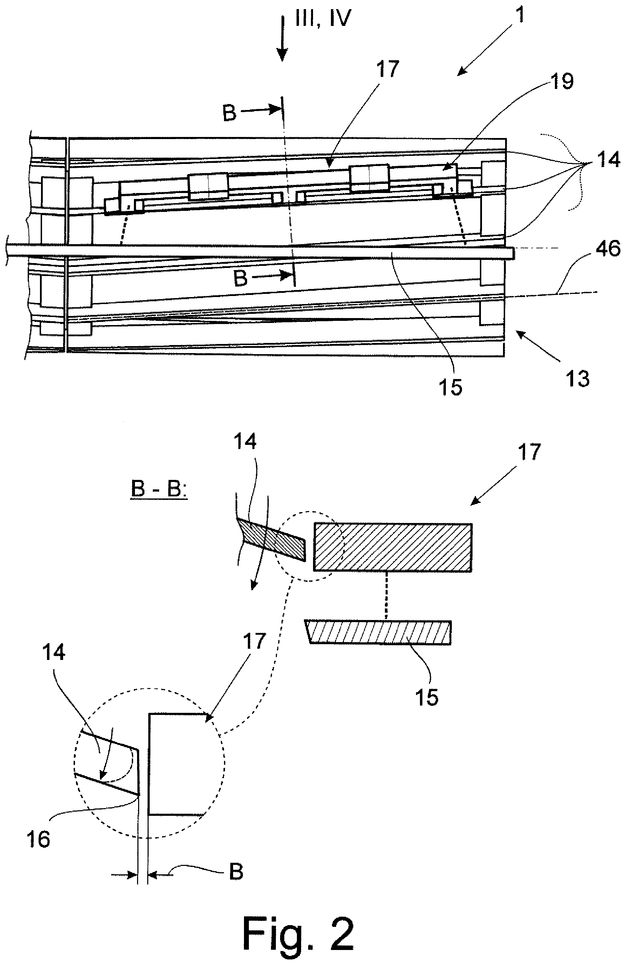

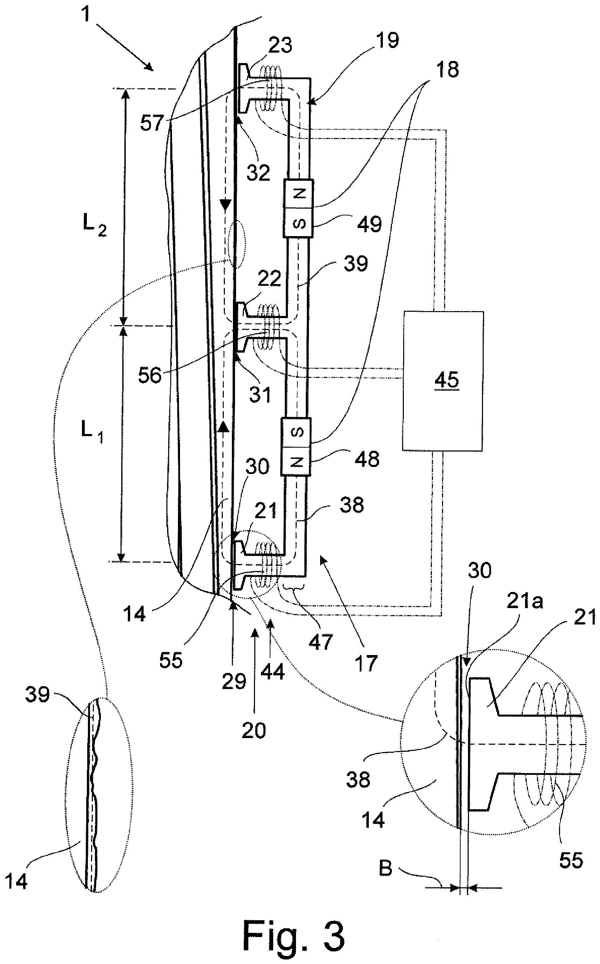

Fig. 2 zeigt in der dortigen Schnittdarstellung B-B den grundsätzlichen Aufbau von Häckselmesser 14 und Gegenschneide 15. Das Häckselmesser 14 weist eine Schneidkante 16 auf, deren Verschleißzustand maßgeblich für die erzielbare Schnittqualität ist. Ein möglicher, verschleißbedingter Abtrag der Schneidkante 16 ist in dieser Darstellung gemäß Fig. 2 gestrichelt angedeutet. Der in Fig. 3 linken Detaildarstellung lässt sich entnehmen, dass der verschleißbedingte Abtrag über die Längserstreckung des betreffenden Häckselmessers 14 ungleichmäßig ist.

Die Erfassungsanordnung 1 weist mindestens eine, hier und vorzugsweise genau eine, Magnetanordnung 17 auf, die eine magnetische Erregeranordnung 18 und eine mit der Erregeranordnung 18 magnetisch gekoppelte Flussleiteinrichtung 19 aufweist. Im Folgenden ist stets die Rede von nur einer Magnetanordnung 17. Alle Ausführungen zu der einen Magnetanordnung 17 gelten für alle weiteren, ggf. vorgesehenen Magnetanordnungen 17 entsprechend.

Der grundsätzliche Aufbau der Magnetanordnung 17 ergibt sich aus der Darstellung gemäß Fig. 3. Hier wird deutlich, dass die Magnetanordnung 17 eine gegenüber der Messtrommel 13 feststehende Polanordnung 20 bereitstellt, die mindestens einen magnetischen Pol 21-28 mit einer Polfläche zum Ausleiten von Magnetfluss ausbildet. Eine solche Polfläche ist in Fig. 3 für den Pol 21 beispielhaft mit dem Bezugszeichen 21a versehen worden.

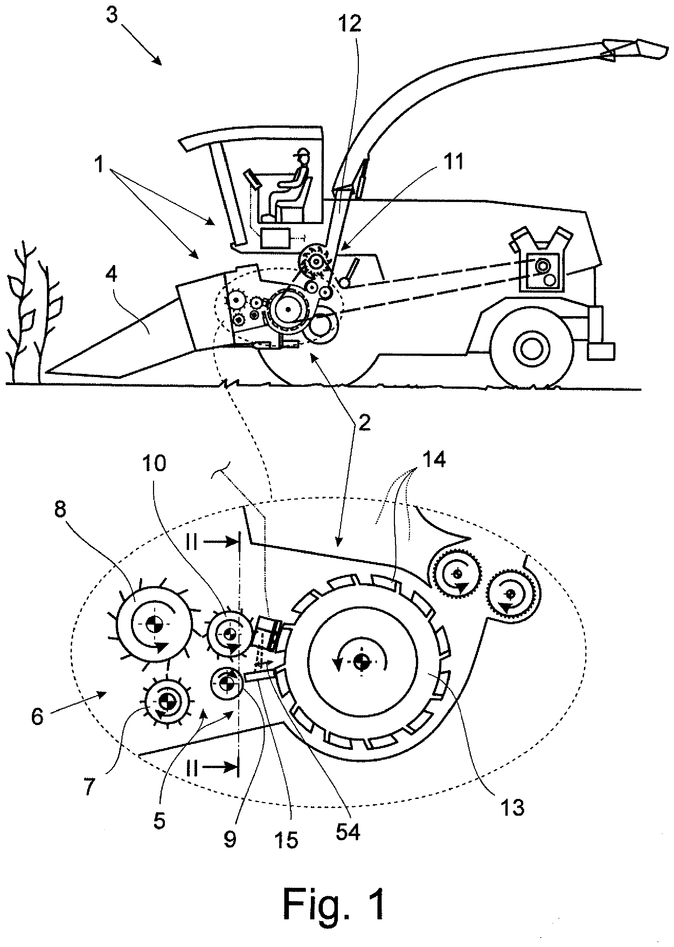

Die Messertrommel 13 des in Fig. 1 gezeigten Feldhäckslers 3 ist axial zweigeteilt und weist in Fahrtrichtung gesehen eine linke Trommelhälfte und eine rechte Trommelhälfte auf. Fig. 2 zeigt die linke Trommelhälfte. Die rechte Trommelhälfte ist analog aufgebaut und mit einer vorschlagsgemäßen Erfassungsanordnung 1 ausgestattet.

Bei einer Drehung der Messertrommel 13 passiert zumindest ein Teil der Häckselmesser 14, hier die Häckselmesser 14 der linken Trommelhälfte, die Polanordnung 20. Dabei bildet das die Polanordnung 20 jeweils passierende Häckselmesser 14 kurzzeitig eine Luftspaltanordnung 29 mit mindestens einem Luftspalt 30-37 zu der Polanordnung 20 hin aus. Fig. 3 zeigt weiter, dass dadurch mindestens ein von der Erregeranordnung 18 erregter Magnetkreis 38-43 über das jeweilige Häckselmesser 14 geschlossen wird. Angesichts der Tatsache, dass der resultierende Magnetfluss in dem jeweiligen Magnetkreis 38-43 bei vorgegebener magnetischer Erregung von der Geometrie und Breite B des jeweiligen Luftspalts 30-37 abhängt, wird mit einem Blick auf die Darstellung gemäß Fig. 2 klar, dass sich basierend auf dem resultierenden magnetischen Fluss der Verschleißzustand des jeweiligen Häckselmessers 14 ermitteln lässt.

Im einfachsten Fall repräsentiert die Veränderung des magnetischen Flusses, ggf. der weiter unten angesprochenen, ersten Ableitung des magnetischen Flusses im Zeitbereich, gegenüber der Situation mit verschleißfreiem Häckselmesser 14 den Verschleißzustand. Der Wert für diese Veränderung repräsentiert damit den Verschleißzustand. Es ist aber auch denkbar, dass aus der mindestens einen ermittelten magnetischen Messgröße ein Wert für die verschleißbedingte Breite mindestens eines Luftspalts 30-37 der Luftspaltanordnung 29 oder die verschleißbedingte Geometrie der Schneidkante 16 des betreffenden Häckselmessers 14 berechnet wird.

Entsprechend weist die vorschlagsgemäße Erfassungsanordnung 1 eine Messanordnung 44 und eine Auswerteeinheit 45 auf, wobei die Messanordnung 44 ganz allgemein mindestens eine magnetische Messgröße betreffend den Magnetfluss in mindestens einem von der Erregeranordnung 18 erregten Magnetkreis 38-43 erfasst und wobei die Auswerteeinheit 45, ebenfalls ganz allgemein, aus der mindestens einen erfassten Messgröße den Verschleißzustand des jeweiligen Häckselmessers 14 ermittelt. Wie dies im Einzelnen stattfindet, wird weiter unten erläutert.

Wesentlich ist hier, dass zumindest ein Teil des von der magnetischen Erregeranordnung 18 erzeugten Magnetflusses zumindest über einen Längsabschnitt L₁-L₆ des die Polanordnung 20 passierenden Häckselmessers 14, vorzugsweise über die gesamte Länge des die Polanordnung 20 passierenden Häckselmessers 14, in dem Häckselmesser 14 längsgeführt wird. Der grundsätzliche Verlauf des Magnetflusses ergibt sich in der Zeichnung aus der Darstellung des jeweils zugehörigen Magnetkreises 38-43.

Der Begriff "längs" ist im Zusammenhang mit den Häckselmessern 14 stets bezogen auf die längliche Ausgestaltung der Häckselmesser 14. Insoweit ist der Begriff "längs" auf die Längserstreckung der Häckselmesser 14 bezogen, die in Fig. 2 beispielhaft mit dem Bezugszeichen 46 versehen worden ist.

Die vorschlagsgemäße Längsführung des von der magnetischen Erregeranordnung 18 erzeugten Magnetflusses ist vorzugsweise über mindestens ein Achtel, weiter vorzugsweise über mindestens ein Viertel und weiter vorzugsweise über mindestens die Hälfte der Längserstreckung der Häckselmesser 14 vorgesehen.

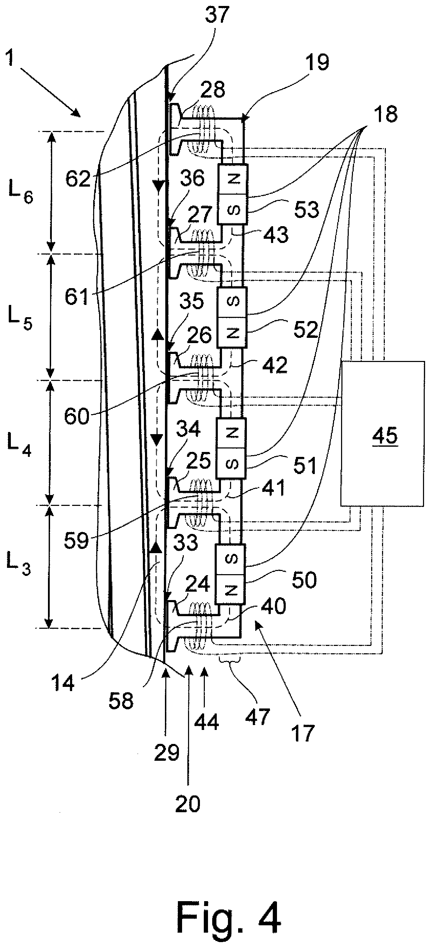

In einer besonders bevorzugten Ausgestaltung weist die Polanordnung 20 mindestens zwei längs des die Polanordnung 20 passierenden Häckselmessers 14 voneinander beabstandete magnetische Pole 21-28 auf, die jeweils einen Luftspalt 30-37 der Luftspaltanordnung 29 zusammen mit dem Häckselmesser 14 ausbilden und zwischen
denen der von der magnetischen Erregeranordnung 18 erzeugte Magnetfluss in dem Häckselmesser 14 längsgeführt wird. Dadurch lässt sich der Verschleißzustand des Häckselmessers 14 ebenfalls im Längsabschnitt L₁-L₆ zwischen den beiden Polen 21-28 ermitteln. Dies ist in Fig. 3 für insgesamt drei Pole 21-23 und in Fig. 4 für insgesamt fünf Pole 24-28 gezeigt.

Mindestens zwei Pole der Polanordnung 20 sind vorzugsweise um mindestens ein Sechzehntel, weiter vorzugsweise um mindestens ein Achtel, weiter vorzugsweise um mindestens ein Viertel und weiter vorzugsweise um mindestens die Hälfte der Längserstreckung des betreffenden Häckselmessers 14 voneinander beabstandet.

Mit der Lage der Pole 21-23 entlang des jeweils passierenden Häckselmessers 14 lässt sich einstellen, in welchem Bereich der Verschleißzustand erfasst werden soll. Es ist auch denkbar, die Magnetanordnung 17 insgesamt so auszulegen, dass der Verschleißzustand für unterschiedliche Längsabschnitte L₁-L₆ des betreffenden Häckselmessers 14 separat erfassbar ist. Das lässt sich beispielsweise einfach dadurch realisieren, dass die Flussleiteinrichtung 19 zwei oder mehrere separat voneinander ausgestaltete Abschnitte aufweist.

Die für unterschiedliche Längsabschnitte L₁-L₆ des betreffenden Häckselmessers 14 separate Erfassung des Verschleißzustands ist insbesondere sinnvoll, wenn sich der Verschleiß der Häckselmesser 14 über die Längserstreckung der Häckselmesser 14 verändert. Üblicherweise ist es nämlich so, dass der Verschleiß an den Außenseiten der Messertrommel 13 stärker ist als in der Mitte der Messertrommel 13, so dass sich für die Messertrommel 13 entsprechend eine ballige Formgebung ergibt.

Die Fig. 3 und 4 zeigen weiter, dass der Verschleißzustand in unterschiedlichen Längsabschnitten L₁-L₆ des jeweiligen Häckselmessers 14 ermittelbar ist, wobei die unterschiedlichen Längsabschnitte L₁-L₆jeweils zwischen unterschiedlichen Polen 21-28, hier und vorzugsweise zwischen benachbarten Polen 21-28 der Polanordnung 20, angeordnet sind.

Die oben angesprochene Erfassung des Verschleißzustands in unterschiedlichen Längsabschnitten L₁-L₆ setzt voraus, dass die Polanordnung 20 mindestens drei längs des die Polanordnung 20 passierenden Häckselmessers 14 voneinander beabstandete magnetische Pole 21-28 ausbildet, die jeweils einen Luftspalt 30-37 der Luftspaltanordnung 29 zusammen mit dem die Polanordnung 20 passierenden Häckselmesser 14 ausbilden. Dies ist in Fig. 3 gezeigt. Dabei ist es vorzugsweise so, dass mindestens einer der Pole 21-28, hier und vorzugsweise der Pol 22, Bestandteil zweier von der magnetischen Erregeranordnung 18 erregter Magnetkreise 38,39 ist. Eine Ermittlung des durch die beiden Magnetkreise 38,39 fließenden Magnetflusses gibt also wie oben angesprochen Aufschluss über den Verschleißzustand des jeweiligen Häckselmessers 14 in den Längsabschnitten L₁ und L₂.

Die Ermittlung des Verschleißzustands des jeweiligen Häckselmessers 14 in weiteren Längsabschnitten L₁-L₆ erlaubt die weiter bevorzugte Ausgestaltung gemäß Fig. 4, bei der die Polanordnung 20 mindestens fünf, hier und vorzugsweise genau fünf, längs des die Polanordnung 20 passierenden Häckselmessers 14 voneinander beabstandete magnetische Pole 21-28 ausbildet, die jeweils, wie oben, einen Luftspalt 30-37 der Luftspaltanordnung 29 zusammen mit dem die Polanordnung 20 passierenden Häckselmesser 14 ausbilden. Dabei ist es weiter vorzugsweise so, dass mindestens einer der Pole 21-28, hier und vorzugsweise die drei Pole 25,26,27, Bestandteil mindestens zweier von der magnetischen Erregeranordnung 18 erregter Magnetkreise, hier der Magnetkreise 40-43, ist bzw. sind.

Ein besonders verlustarmer Aufbau der Magnetkreise 38-43 ergibt sich dadurch, dass zumindest ein Teil der Pole 21-28, hier und vorzugsweise alle Pole 21-28, der Polanordnung 20 entlang der Schneidkante 16 des die Polanordnung 20 passierenden Häckselmessers 14 oder entlang der Gegenschneide 17 angeordnet sind. Die erstgenannte Alternative lässt sich am besten den Darstellungen gemäß Fig. 3 und 4 entnehmen. Alternativ oder zusätzlich ist es vorgesehen, dass zumindest ein Teil der Pole 21-28 der Polanordnung 20 gleichzeitig von den Häckselmessern 14 passiert werden. Mit dieser Ausrichtung der Pole 21-28 lässt sich ein optimales Ein- und Ausleiten des magnetischen Flusses in das Häckselmesser 14 bzw. aus dem Häckselmesser 14 realisieren, bei dem der magnetische Fluss möglichst in der Schneidkante 16 des Häckselmessers 14 geführt wird.

Eine konstruktiv leicht umsetzbare Ausgestaltung der Flussleiteinrichtung 19 zeigen wiederum die Fig. 3 und 4. Hier ist es vorgesehen, dass die Flussleiteinrichtung 19 einen zentralen Abschnitt 47 aufweist, von dem die Pole 21-28 der Polanordnung 20 abzweigen.

Dabei ist der zentrale Abschnitt 47 der Flussleiteinrichtung 19 hier und vorzugsweise gerade ausgestaltet. Alternativ oder zusätzlich kann es vorgesehen sein, dass der zentrale Abschnitt 47 der Flussleiteinrichtung 19, wie in den Fig. 3 und 4 gezeigt, entlang der Schneidkante 16 des die Polanordnung 20 passierenden Häckselmessers 14 verläuft. Dadurch ergibt sich eine insgesamt symmetrische Struktur der Flussleiteinrichtung 19, was die Ermittlung des Verschleißzustands des jeweiligen Häckselmessers 14 weiter vereinfacht. Alternativ kann es auch vorgesehen sein, dass der zentrale Abschnitt 47 der Flussleiteinrichtung 19 entlang der Gegenschneide 15 verläuft.

Für die Ausgestaltung der Erregeranordnung 18 sind verschiedene vorteilhafte Varianten denkbar. Hier und vorzugsweise weist die Erregeranordnung 18 mindestens einen Erregermagneten 48-53 auf, der als Permanentmagnet ausgestaltet ist. Alternativ kann es sich bei dem Erregermagneten 48-53 auch um einen Elektromagneten handeln. Bei den in den Fig. 3 und 4 dargestellten Ausführungsbeispielen sind die Erregermagnete 48-53 in einem Abschnitt der Flussleiteinrichtung 19, hier in dem zentralen Abschnitt 47 der Flussleiteinrichtung 19, angeordnet. Grundsätzlich können die Erregermagnete 48-53 auch in die Pole 21-28 der Polanordnung 20 integriert sein.

Bei den dargestellten und insoweit bevorzugten Ausführungsbeispielen ist es so, dass jedem Magnetkreis 38-43 ein Erregermagnet 48-53 zugeordnet ist. Grundsätzlich kann es aber auch vorgesehen sein, dass ein Erregermagnet 48-53 für die magnetische Erregung zweier oder mehrerer Magnetkreise 38-43 sorgt.

Eine Zusammenschau der Fig. 1 und 2 zeigt, dass die Magnetanordnung 17, hier und vorzugsweise zusammen mit der Messanordnung 44, als von der Gegenschneide 15 separate Baueinheit ausgestaltet ist. Dies ist vorteilhaft, da die Magnetanordnung 17, hier zusammen mit der Messanordnung 44, und die Gegenschneide 15 andererseits separat voneinander gestaltet werden können und dass eine gegenseitige Beeinträchtigung mechanischer und/oder messtechnischer Eigenschaften nicht stattfindet.

Um sicherzustellen, dass die Messanordnung einer Zustellung 54 der Gegenschneide 15 folgt, ist es hier und vorzugsweise so, dass die Magnetanordnung 17, vorzugsweise zusammen mit der Messanordnung 44, mechanisch mit der Gegenschneide 15 gekoppelt ist. In besonders bevorzugter Ausgestaltung handelt es sich bei dieser mechanischen Kopplung um eine mechanische Verbindung, was sich besonders einfach realisieren lässt. Diese mechanische Verbindung ist in der Zeichnung durch gestrichelte Linien lediglich angedeutet.

Bei dem dargestellten und insoweit bevorzugten Ausführungsbeispiel ist die Magnetanordnung 17, hier zusammen mit der Messanordnung 44, oberhalb der Gegenschneide 15 angeordnet. Grundsätzlich kann es auch umgekehrt vorgesehen sein, dass die Magnetanordnung 17, hier zusammen mit der Messanordnung 44, unterhalb der Gegenschneide 15 angeordnet ist.

Die Messanordnung 44 weist hier und vorzugsweise mindestens eine Messeinheit 55-62 zur Erfassung der mindestens einen magnetflussbasierten Messgröße auf. Dabei ist es vorzugsweise vorgesehen, dass mindestens zwei von der magnetischen Erregeranordnung 18 erregten Magnetkreisen 38-43 jeweils eine Messeinheit 55-62 zugeordnet ist. Bei den in den Fig. 3 und 4 dargestellten und insoweit bevorzugten Ausführungsbeispielen sind allen Magnetkreisen 38-43 jeweils eine Messeinheit 55-62 zugeordnet.

Die Fig. 3 und 4 zeigen eine besonders einfache Ausgestaltung der Messeinheiten 55-62. Dabei weist eine Messeinheit 55-62 jeweils eine Spulenanordnung auf, die von dem Magnetfluss in der Flussleiteinrichtung 19 durchflossen wird. Durch die Drehung der Messertrommel 13 wird die oben angesprochene Luftspaltanordnung 29 zyklisch erzeugt und wieder aufgehoben, so dass sich eine entsprechend zyklische Änderung des Magnetflusses im Zeitbereich ergibt in mindestens einem der Magnetkreise 38-43 ergibt. Dabei erfasst die Messeinheit 55-62 als Messgröße vorzugsweise die in der Spulenanordnung induzierte Spannung. Insoweit entspricht die Messgröße der ersten Ableitung des betreffenden Magnetflusses im Zeitbereich, aus der sich, ggf. mit Bezug auf den verschleißfreien Zustand, ein Wert für den Verschleißzustand des betreffenden Häckselmessers 14 ermitteln lässt.

Für die Ausgestaltung der Messeinheit 55-62 sind zahlreiche andere Varianten denkbar. Beispielsweise kann die Messeinheit 55-62 als Magnetfeldsensor ausgestaltet sein, wobei die Messeinheit 55-62 dann als Messgröße einen Wert für die magnetische Flussdichte in einem von der magnetischen Erregeranordnung 18 erregten Magnetkreis 38-43 erfasst. Eine solche Messeinheit 55-62 kann beispielsweise als Hall-Sensor, als MR-Sensor, als GMR-Sensor o. dgl. ausgestaltet sein.

Es wurde weiter oben erläutert, dass sich die von der Messanordnung 44 ermittelte Messgröße in Abhängigkeit vom Verschleißzustand ändert. Dies bedeutet, dass sich der Verschleißzustand aus der ermittelten Messgröße ableiten lässt. Dies übernimmt die Auswerteeinheit 45, die hierfür in an sich üblicher Weise zumindest einen Mikroprozessor und eine Speichereinheit aufweist. Für die Ermittlung des Verschleißzustands sind verschiedene vorteilhafte Varianten denkbar. Im einfachsten Fall ist ein Lernvorgang vorgesehen, in dem die betreffende Messgröße für unterschiedliche Verschleißzustände erfasst und abgespeichert wird. Aus diesen Werten lässt sich ein Kennfeld bilden, das die Basis für die spätere Ermittlung des Verschleißzustands, also eines Wertes, das den Verschleißzustand repräsentiert, bildet.

Ganz allgemein ist es vorgesehen, dass die Auswerteeinheit 45 aus einem Betrag, insbesondere einem Spitzenwert, der mindestens eine Messgröße, und/oder einem Verlauf der mindestens einen Messgröße, jeweils während einer Drehung der Messertrommel 13, den Verschleißzustand des jeweiligen Häckselmessers 14 ermittelt. Durch die Drehung der Messertrommel 13 ergibt sich durch die Bewegung der Häckselmesser 14 eine laufende Veränderung der Magnetflüsse in den jeweiligen Magnetkreisen 38-43, die von dem Verschleißzustand abhängig ist und die über die oben angesprochene, induzierte Spannung leicht erfassbar ist.

Es darf noch darauf hingewiesen werden, dass bei den dargestellten Ausführungsbeispielen stets die Rede von nur einer einzigen Magnetanordnung 17 ist, deren Magnetfluss von der Messanordnung 44 erfasst und von der Auswerteeinheit 45 ausgewertet wird. Es kann aber auch vorgesehen sein, dass zwei oder mehrere Magnetanordnungen 17 vorgesehen sind, deren Magnetflüsse von der Messanordnung 44 erfasst und von der Auswerteeinheit 45 ausgewertet werden. Beispielsweise kann es vorteilhaft sein, dass entlang des jeweils passierenden Häckselmessers 14 zwei Magnetanordnungen 17 vorgesehen sind, deren Magnetflüsse von der Messanordnung 44 erfasst und von der Auswerteeinheit 45 ausgewertet werden. Damit ist eine Erfassung des Verschleißzustands an zwei Längsabschnitten L₁-L₆ oder an mehreren Längsabschnitten L₁-L₆ des betreffenden Häckselmessers 14 möglich. Grundsätzlich kann es dann auch vorgesehen sein, dass die Auswerteeinheit 45 einzelne, vorzugsweise separat voneinander arbeitende, Auswerte-Untereinheiten aufweist, die den einzelnen Magnetanordnungen 17 zugeordnet sind. Dadurch ist es möglich, dass die Magnetanordnungen 17 zusammen mit Messanordnung 44 und Auswerteeinheit 45 jeweils die Funktion eines autarken Sensors bereitstellen.

Nach einer weiteren Lehre, der eigenständige Bedeutung zukommt, wird der Feldhäcksler 3, der mit einem vorschlagsgemäßen Häckselwerk 2 ausgestattet ist, als solcher beansprucht. Auch insoweit darf auf alle diesbezüglichen Ausführungen verwiesen werden.

### Bezugszeichenliste

- 1: Erfassungsanordnung
- 2: Häckselwerk
- 3: Feldhäcksler
- 4: Erntevorsatz
- 5: Vorpresseinheit
- 6: Presskanal
- 7-10: Vorpresswalzen
- 11: Fördervorrichtung
- 12: Auswurfkanal
- 13: Messertrommel
- 14: Häckselmesser
- 15: Gegenschneide
- 16: Schneidkante
- 17: Magnetanordnung
- 18: Erregeranordnung
- 19: Flussleiteinrichtung
- 20: Polanordnung
- 21-28: Pole
- 21a: Polfläche
- 29: Luftspaltanordnung
- 30-37: Luftspalt
- 38-43: Magnetkreis
- 44: Messanordnung
- 45: Auswerteeinheit
- 46: Längserstreckung
- 47: Zentraler Abschnitt der Flussleiteinrichtung
- 48-53: Erregermagnete
- 54: Zustellung
- 55-62: Messeinheit
- B: Breite

## Patentansprüche

1. Häckselwerk eines zur Verarbeitung eines Gutstroms vorgesehenen Feldhäckslers (3), wobei das Häckselwerk (2) eine Messertrommel (13) mit daran angeordneten, länglichen Häckselmessern (14) sowie mindestens eine Gegenschneide (15), die mit den Häckselmessern (14) zusammenwirkt, aufweist, wobei eine
Erfassungsanordnung zur Erfassung eines Verschleißzustands eines Häckselwerks (2) vorgesehen ist,
wobei die Erfassungsanordnung (1) mindestens eine Magnetanordnung (17) aufweist, die eine magnetische Erregeranordnung (18) und eine damit magnetisch gekoppelte Flussleiteinrichtung (19) aufweist,
wobei die Magnetanordnung (17) eine Polanordnung (20) bereitstellt, die mindestens einen magnetischen Pol (21-28) mit einer Polfläche zum Ausleiten von Magnetfluss ausbildet,
wobei bei einer Drehung der Messertrommel (13) zumindest ein Teil der Häckselmesser (14) die Polanordnung (20) passiert, das die Polanordnung (20) jeweils passierende Häckselmesser (14) eine Luftspaltanordnung (29) mit mindestens einem Luftspalt (30-37) zu der Polanordnung (20) hin ausbildet und dadurch mindestens ein von der Erregeranordnung (18) erregter Magnetkreis (38-43) über das jeweilige Häckselmesser (14) geschlossen wird,
wobei die Erfassungsanordnung (1) eine Messanordnung (44) und eine Auswerteeinheit (45) aufweist, wobei die Messanordnung (44) mindestens eine magnetische Messgröße betreffend den Magnetfluss in mindestens einem von der Erregeranordnung (18) erregten Magnetkreis (38-43) erfasst und wobei die Auswerteeinheit (45) aus der mindestens einen erfassten Messgröße den Verschleißzustand des jeweiligen Häckselmessers (14) ermittelt,
**dadurch gekennzeichnet,**
**dass** zumindest ein Teil des von der magnetischen Erregeranordnung (18) erzeugten Magnetflusses zumindest über einen Längsabschnitt (L₁-L₆) des die Polanordnung (20) passierenden Häckselmessers (14) in dem Häckselmesser (14) längsgeführt wird, wobei die Polanordnung (20) mindestens zwei längs des die Polanordnung (20) passierenden Häckselmessers (14) voneinander beabstandete magnetische Pole (21-28) ausbildet, die jeweils einen Luftspalt (30-37) der Luftspaltanordnung (29) zusammen mit dem Häckselmesser (14) ausbilden und zwischen denen der von der magnetischen Erregeranordnung (18) erzeugte Magnetfluss in dem Häckselmesser (14) längsgeführt wird, so dass der Verschleißzustand des Häckselmessers (14) im Längsabschnitt (L₁-L₆) zwischen den beiden Polen (21-28) ermittelbar ist.

2. Häckselwerk nach Anspruch 1, **dadurch gekennzeichnet, dass** der Verschleißzustand in unterschiedlichen Längsabschnitten (L₁-L₆) des jeweiligen Häckselmessers (14) ermittelbar ist, wobei die unterschiedlichen Längsabschnitte (L₁-L₆) jeweils zwischen unterschiedlichen Polen (21-28) der Polanordnung (20) angeordnet sind.

3. Häckselwerk nach einem der vorhergehenden Ansprüche, **dadurch gekennzeichnet, dass** die Polanordnung (20) mindestens drei längs des die Polanordnung (20) passierenden Häckselmessers (14) voneinander beabstandete magnetische Pole (21-28) ausbildet, die jeweils einen Luftspalt (30-37) der Luftspaltanordnung (29) zusammen mit dem die Polanordnung (20) passierenden Häckselmesser (14) ausbilden, vorzugsweise, dass mindestens einer der Pole (21-28) Bestandteil zweier von der magnetischen Erregeranordnung (18) erregter Magnetkreise (38-43) ist.

4. Häckselwerk nach einem der vorhergehenden Ansprüche, **dadurch gekennzeichnet, dass** die Polanordnung (20) mindestens fünf längs des die Polanordnung (20) passierenden Häckselmessers (14) voneinander beabstandete magnetische Pole (21-28) ausbildet, die jeweils einen Luftspalt (30-37) der Luftspaltanordnung (29) zusammen mit dem die Polanordnung (20) passierenden Häckselmesser (14) ausbilden, vorzugsweise, dass mindestens einer der Pole (21-28), insbesondere mindestens drei der Pole (21-28), Bestandteil mindestens zweier von der magnetischen Erregeranordnung (18) erregter Magnetkreise (38-43) ist bzw. sind.

5. Häckselwerk nach einem der vorhergehenden Ansprüche, **dadurch gekennzeichnet, dass** zumindest ein Teil der Pole (21-28) der Polanordnung (20) entlang der Schneidkante (16) des die Polanordnung (20) passierenden Häckselmessers (14) oder entlang der Gegenschneide (15) angeordnet sind, und/oder, dass zumindest ein Teil der Pole (21-28) der Polanordnung (20) gleichzeitig von den Häckselmessern (14) passiert werden.

6. Häckselwerk nach einem der vorhergehenden Ansprüche, **dadurch gekennzeichnet, dass** die Flussleiteinrichtung (19) einen zentralen Abschnitt (47) aufweist, von dem die Pole (21-28) der Polanordnung (20) abzweigen, vorzugsweise, dass der zentrale Abschnitt (47) der Flussleiteinrichtung (19) gerade ausgestaltet ist und/oder entlang der Schneidkante (16) des die Polanordnung (20) passierenden Häckselmessers (14) oder entlang der Gegenschneide (15) verläuft.

7. Häckselwerk nach einem der vorhergehenden Ansprüche, **dadurch gekennzeichnet, dass** die Magnetanordnung (17), insbesondere zusammen mit der Messanordnung (44), als von der Gegenschneide (15) separate Baueinheit ausgestaltet ist.

8. Häckselwerk nach einem der vorhergehenden Ansprüche, **dadurch gekennzeichnet, dass** die Magnetanordnung (17), insbesondere zusammen mit der Messanordnung (44), mit der Gegenschneide (15) mechanisch gekoppelt, insbesondere mechanisch verbunden, ist, vorzugsweise, dass die Magnetanordnung (17), insbesondere zusammen mit der Messanordnung (44), oberhalb der Gegenschneide (15) oder unterhalb der Gegenschneide (15) angeordnet ist.

9. Häckselwerk nach einem der vorhergehenden Ansprüche, **dadurch gekennzeichnet, dass** die Messanordnung (44) mindestens eine Messeinheit (55-62) zur Erfassung der mindestens einen magnetflussbasierten Messgröße aufweist, vorzugsweise, dass mindestens zwei von der magnetischen Erregeranordnung (18) erregten Magnetkreisen (38-43) jeweils eine Messeinheit (55-62) zugeordnet ist.

10. Häckselwerk nach Anspruch 9, **dadurch gekennzeichnet, dass** die Messeinheit (55-62) eine Spulenanordnung aufweist, die von dem Magnetfluss in der Flussleiteinrichtung (19) durchflossen wird und dass die Messeinheit (55-62) als Messgröße die in die Spulenanordnung induzierte Spannung erfasst.

11. Häckselwerk nach Anspruch 9, **dadurch gekennzeichnet, dass** die Messeinheit (55-62) als Magnetfeldsensor ausgestaltet ist und dass die Messeinheit (55-62) als Messgröße einen Wert für die magnetische Flussdichte in einem von der magnetischen Erregeranordnung (18) erregten Magnetkreis (38-43) erfasst.

12. Häckselwerk nach einem der vorhergehenden Ansprüche, **dadurch gekennzeichnet, dass** die Auswerteeinheit (45) aus einem Betrag, insbesondere einem Spitzenwert, der mindestens einen Messgröße, und/oder einem Verlauf der mindestens einen Messgröße, jeweils während einer Drehung der Messertrommel (13), den Verschleißzustand des jeweiligen Häckselmessers (14) ermittelt.

13. Feldhäcksler zur Verarbeitung eines Gutstroms, mit einer Vorpresseinheit (5), die mindestens zwei, einen Presskanal (6) ausbildende Vorpresswalzen (7-10) aufweist,
**dadurch gekennzeichnet,**
**dass** ein Häckselwerk (2) nach Anspruch 1 vorgesehen ist.

## Claims

1. A chopping assembly for a forage harvester (3) for processing a stream of crop, wherein the chopping assembly (2) comprises a chopper drum (13) with elongated chopper blades (14) disposed thereon, as well as at least one shear bar (15) which cooperates with the chopper blades (14), wherein a detection assembly is provided for detecting a state of wear of a chopping assembly (2), wherein the detection assembly (1) has at least one magnet assembly (17) which has a magnetic excitation assembly (18) and a flux-conducting device (19) magnetically coupled thereto, wherein the magnet assembly (17) provides a pole assembly (20) which forms at least one magnetic pole (21 - 28) with a pole surface for conducting magnetic flux outwards,
wherein at least a portion of the chopper blade (14) passes the pole assembly (20) during a rotation of the chopper drum (13) so that each chopper blade (14) which is passing the pole assembly (20) forms an air gap configuration (29) with at least one air gap (30 - 37) with respect to the pole assembly (20), and as a result, at least one magnetic circuit (38 - 43) energised by the excitation assembly (18) is closed via the respective chopper blade (14),
wherein the detection assembly (1) has a measuring assembly (44) and an evaluation unit (45), wherein the measuring assembly (44) detects at least one magnetic variable concerning the magnetic flux in at least one of the magnetic circuits (38 - 43) energised by the excitation assembly (18) and wherein the evaluation unit (45) determines the state of wear of the respective chopper blade (14) from the at least one detected variable,
**characterized in that**
at least a portion of the magnetic flux generated by the magnetic excitation assembly (18) is guided longitudinally in the chopper blade (14) via at least one longitudinal section (L₁ - L₆) of the chopper blade (14) which is passing the pole assembly (20), wherein the pole assembly (20) forms at least two magnetic poles (21 - 28) which are mutually spaced along the chopper blade (14) which is passing the pole assembly (20), each magnetic pole forming a respective air gap (30 - 37) of the air gap configuration (29) together with the chopper blade (14) and between which the magnetic flux generated by the magnetic excitation assembly (18) is guided longitudinally, so that the state of wear of the chopper blade (14) in the longitudinal section (L₁ - L₆) between the two poles (21 - 28) can be determined.

2. The chopping assembly according to claim 1, **characterized in that** the state of wear in different longitudinal sections (L₁ - L₆) of the respective chopper blade (14) can be determined, wherein the different longitudinal sections (L₁ - L₆) are respectively disposed between different poles (21 - 28) of the pole assembly (20).

3. The chopping assembly according to one of the preceding claims, **characterized in that** the pole assembly (20) forms at least three magnetic poles (21 - 28) which are mutually spaced along the chopper blade (14) which is passing the pole assembly (20), each magnetic pole forming a respective air gap (30 - 37) of the air gap configuration (29) together with the chopper blade (14) which is passing the pole assembly (20), preferably such that at least one of the poles (21 - 28) is a component of two of the magnetic circuits (38 - 43) energised by the magnetic excitation assembly (18).

4. The chopping assembly according to one of the preceding claims, **characterized in that** the pole assembly (20) forms at least five magnetic poles (21 - 28) which are mutually spaced along the chopper blade (14) which is passing the pole assembly (20), each magnetic pole forming a respective air gap (30 - 37) of the air gap configuration (29) together with the chopper blade (14) which is passing the pole assembly (20), preferably such that at least one of the poles (21 - 28), in particular at least three of the poles (21 - 28), is or are a component of two of the magnetic circuits (38 - 43) energised by the magnetic excitation assembly (18).

5. The chopping assembly according to one of the preceding claims, **characterized in that** at least one of the poles (21 - 28) of the pole assembly (20) is disposed along the cutting edge (16) of the chopper blade (14) which is passing the pole assembly (20) or along the shear bar (15), and/or **in that** at least a portion of the poles (21 - 28) of the pole assembly (20) is simultaneously passed by the chopper blades (14).

6. The chopping assembly according to one of the preceding claims, **characterized in that** the flux-conducting device (19) comprises a central section (47), from which the poles (21 - 28) of the pole assembly (20) branch off, preferably **in that** the central section (47) of the flux-conducting device (19) is configured so as to be straight and/or extends along the cutting edge (16) of the chopper blade (14) which is passing the pole assembly (20), or extends along the shear bar (15).

7. The chopping assembly according to one of the preceding claims, **characterized in that** the magnet assembly (17), in particular together with the measuring assembly (44), is configured as a physical unit which is separate from the shear bar (15).

8. The chopping assembly according to one of the preceding claims, **characterized in that** the magnet assembly (17), in particular together with the measuring assembly (44), is mechanically coupled, in particular mechanically connected, to the shear bar (15), preferably **in that** the magnet assembly (17), in particular together with the measuring assembly (44), is disposed above the shear bar (15) or below the shear bar (15).

9. The chopping assembly according to one of the preceding claims, **characterized in that** the measuring assembly (44) has at least one measuring unit (55 - 62) for detecting the at least one magnetic flux-based measured variable, preferably **in that** a respective measuring unit (55 - 62) is associated with at least two of the magnetic circuits (38 - 43) energised by the magnetic excitation assembly (18).

10. The chopping assembly according to claim 9, **characterized in that** the measuring unit (55 - 62) comprises a coil assembly, through which the magnetic flux flows in the flux-conducting device (19), and **in that** the at measuring unit (55 - 62) detects the voltage induced in the coil assembly as the measured variable.

11. The chopping assembly according to claim 9, **characterized in that** the measuring unit (55 - 62) is configured as a magnetic field sensor and **in that** the measuring unit (55 - 62) detects, as the measured variable, a value for the magnetic flux density in one of the magnetic circuits (38 - 43) energised by the magnetic excitation assembly (18).

12. The chopping assembly according to one of the preceding claims, **characterized in that** the evaluation unit (45) is configured to determine the state of wear of the respective chopper blade (14) from a quantity, in particular a peak value, of the at least one measured variable and/or from a profile of the at least one measured variable, respectively during a rotation of the chopper drum (13).

13. A forage harvester for processing a stream of crop, having a pre-press unit (5) which has at least two pre-press rollers (7 - 10) forming a press channel (6),
**characterized in that**
a chopping assembly (2) according to claim 1 is provided.

## Revendications

1. Système de hachage d'une ensileuse (3) prévue pour traiter un flux de produit, le système de hachage (2) comprenant un tambour porte-couteaux (13) avec des couteaux de hachage allongés (14) disposés dessus ainsi qu'au moins une contre-lame (15) qui coopère avec les couteaux de hachage (14), un agencement de détection étant prévu pour détecter un état d'usure d'un système de hachage (2), l'agencement de détection (1) comportant au moins un agencement d'aimant (17) qui comporte un agencement d'excitateur magnétique (18) et un équipement de guidage de flux (19) couplé magnétiquement à celui-ci, l'agencement d'aimant (17) fournissant un agencement polaire (20) qui forme un pôle magnétique (21-28) avec une surface polaire pour évacuer du flux magnétique, lors d'une rotation du tambour porte-couteaux (13) au moins une partie des couteaux de hachage (14) défilant devant l'agencement polaire (20), le couteau de hachage (14) qui défile respectivement devant l'agencement polaire (20) créant en direction de l'agencement polaire (20) un agencement d'entrefer (29) avec au moins un entrefer (30-37), et au moins un circuit magnétique (38-43) excité par l'agencement d'excitateur (18) étant fermé par l'intermédiaire du couteau de hachage respectif (14), l'agencement de détection (1) comportant un agencement de mesure (44) et une unité d'analyse (45), l'agencement de mesure (44) recueillant au moins une grandeur de mesure magnétique relative au flux magnétique dans au moins un du circuit magnétique (38-43) excité par l'agencement d'excitateur (18), et l'unité d'analyse (45) déterminant, à partir de la grandeur de mesure, l'état d'usure du couteau de hachage respectif (14), **caractérisé en ce qu'**au moins une partie du flux magnétique généré par l'agencement d'excitateur magnétique (18) est guidée longitudinalement dans le couteau de hachage (14) au moins sur une portion de longueur (L₁-L₆) du couteau de hachage (14) défilant devant l'agencement polaire (20), l'agencement polaire (20) formant au moins deux pôles magnétiques (21-28) qui sont distants l'un de l'autre le long du couteau de hachage (14) défilant devant l'agencement polaire (20), qui forment respectivement un entrefer (30-37) de l'agencement d'entrefer (29) conjointement avec le couteau de hachage (14) et entre lesquels le flux magnétique généré par l'agencement d'excitateur magnétique (18) est guidé longitudinalement dans le couteau de hachage (14), ce qui permet de déterminer l'état d'usure du couteau de hachage (14) dans la portion de longueur (L₁-L₆) entre les deux pôles (21-28).

2. Système de hachage selon la revendication 1, **caractérisé en ce que** l'état d'usure peut être déterminé dans différentes portions de longueur (L₁-L₆) du couteau de hachage respectif (14), les différentes portions de longueur (L₁-L₆) étant disposées respectivement entre différents pôles (21-28) de l'agencement polaire (20).

3. Système de hachage selon une des revendications précédentes, **caractérisé en ce que** l'agencement polaire (20) forme au moins trois pôles magnétiques (21-28) qui sont distants les uns des autres le long du couteau de hachage (14) défilant devant l'agencement polaire (20) et qui forment respectivement un entrefer (30-37) de l'agencement d'entrefer (29) conjointement avec le couteau de hachage (14) défilant devant l'agencement polaire (20), de préférence **en ce qu'**au moins un des pôles (21-28) est une composante de deux circuits magnétiques (38-43) excités par l'agencement d'excitateur magnétique (18).

4. Système de hachage selon une des revendications précédentes, **caractérisé en ce que** l'agencement polaire (20) forme au moins cinq pôles magnétiques (21-28) qui sont distants les uns des autres le long du couteau de hachage (14) défilant devant l'agencement polaire (20) et qui forment respectivement un entrefer (30-37) de l'agencement d'entrefer (29) conjointement avec le couteau de hachage (14) défilant devant l'agencement polaire (20), de préférence **en ce qu'**au moins un des pôles (21-28), en particulier au moins trois des pôles (21-28), est, respectivement sont des composantes au moins de deux circuits magnétiques (38-43) excités par l'agencement d'excitateur magnétique (18).

5. Système de hachage selon une des revendications précédentes, **caractérisé en ce qu'**au moins une partie des pôles (21-28) de l'agencement polaire (20) est disposée le long d'une arête de coupe (16) du couteau de hachage (14) défilant devant l'agencement polaire (20) ou le long de la contre-lame (15), et/ou **en ce qu'**au moins une partie des pôles (21-28) de l'agencement polaire (20) voient défiler devant eux les couteaux de hachage (14) simultanément.

6. Système de hachage selon une des revendications précédentes, **caractérisé en ce que** l'équipement de guidage de flux (19) comporte une portion centrale (47) de laquelle dérivent les pôles (21-28) de l'agencement polaire (20), de préférence **en ce que** la portion centrale (47) de l'équipement de guidage de flux (19) est conçue de manière rectiligne et/ou s'étend le long de l'arête de coupe (16) du couteau de hachage (14) défilant devant l'agencement polaire (20) ou le long de la contre-lame (15).

7. Système de hachage selon une des revendications précédentes, **caractérisé en ce que** l'agencement d'aimant (17), en particulier conjointement avec l'agencement de mesure (44), est conçu comme une unité structurelle séparée de la contre-lame (15).

8. Système de hachage selon une des revendications précédentes, **caractérisé en ce que** l'agencement d'aimant (17), en particulier conjointement avec l'agencement de mesure (44), est couplé mécaniquement, en particulier relié mécaniquement, à la contre-lame (15), de préférence **en ce que** l'agencement d'aimant (17), en particulier conjointement avec l'agencement de mesure (44), est disposé au-dessus de la contre-lame (15) ou au-dessous de la contre-lame (15).

9. Système de hachage selon une des revendications précédentes, **caractérisé en ce que** l'agencement de mesure (44) comporte au moins une unité de mesure (55-62) pour recueillir la grandeur de mesure basée sur le flux magnétique, de préférence **en ce qu'**à au moins deux circuits magnétiques (38-43) excités par l'agencement d'excitateur magnétique (18) est associée respectivement une unité de mesure (55-62).

10. Système de hachage selon la revendication 9, **caractérisé en ce que** l'unité de mesure (55-62) comporte un agencement de bobine qui est parcouru par le flux magnétique dans l'équipement de guidage de flux (19) et **en ce que** l'unité de mesure (55-62) recueille comme grandeur de mesure la tension induite dans l'agencement de bobine.

11. Système de hachage selon la revendication 9, **caractérisé en ce que** l'unité de mesure (55-62) est conformée en capteur de champ magnétique et **en ce que** l'unité de mesure (55-62) recueille comme grandeur de mesure une valeur pour la densité de flux magnétique dans un circuit magnétique (38-43) excité par l'agencement d'excitateur magnétique (18).

12. Système de hachage selon une des revendications précédentes, **caractérisé en ce que** l'unité d'analyse (45) détermine l'état d'usure du couteau de hachage respectif (14) à partir d'une valeur, en particulier d'une valeur de crête et/ou d'une variation de la au moins une grandeur de mesure, respectivement pendant une rotation du tambour porte-couteaux (13).

13. Ensileuse pour traiter un flux de produit, comprenant une unité de précompression (5) qui comporte au moins deux rouleaux de précompression (7-10) formant un canal de pressage (6), **caractérisée en ce qu'**un système de hachage (2) selon la revendication 1 est prévu.
